# EUROPEAN PATENT APPLICATION

(11) **EP 1 612 673 A1**
(43) Date of publication of application: **04.01.2006**
(21) Application number: 04076883.0
(22) Date of filing: 29.06.2004
(51) Int. Cl.: G06F 9/50

(54) **Method and system for admission control**

(71) Applicant: Nederlandse Organisatie voor Toegepast-Natuurwetenschappelijk Onderzoek TNO, 2628 VK Delft (NL)
(72) Inventor: Gijsen, Bart Michel Magdalena, 2587 RB Den Haag (NL); Meulenhoff, Pieter Jan, 9804 PW Noordhorn (NL); Blom, Marcus Anthonius, 2273 VS Voorburg (NL); van der Mei, Robert Douwe, 1066 HR Amsterdam (NL)
(74) Representative: Winckels, Johannes Hubertus F.

(57) **Abstract**

Method for handling an access request to an information processing system (5). It is detected whether or not the system is or threatens to be overloaded. When the system is overloaded or threatens to be overloaded, the kind of system overload is detected, the kind of requested access is detected and the kind of requested access is compared with the kind of system overload. If the kind of requested access is not deemed to contribute to the system overload the requested access is judged to be admissible. If the kind of requested access is deemed to contribute to the system overload the requested access may be judged to be not-admissible. Different service level indicators may be assigned to different clients. If access is deemed to contribute to the system overload, the requested access of clients having a relative high service level indicator may be given preference or priority over clients having a relative low service level indicator.

## Description

### FIELD OF THE INVENTION

The invention relates to a method for improved handling of an access request to an information processing system, e.g. a network server. Hereinafter the information processing system may be indicated as (web, Internet, network) server.

### BACKGROUND OF THE INVENTION

Nowadays, popular web servers can suffer from severe, albeit often only temporarily, server overload. Server overload will cause web-browsing performance to degrade in terms of increasing response times or even server unavailability. In e-commerce context, customers that are dissatisfied about overly long response times or unavailability of servers will cause a decrease in revenues. Therefore controlling web server performance will be essential for companies whose business relies on web services.

### SUMMARY OF THE INVENTION

The method proposed below is based on the following considerations. Server overload will lead to degradation of browsing performance for *all* active users. The impact of server overload on user perception could be reduced by deploying selective admission control, e.g. user selective admission control. User selective admission control means that server-access is denied to *some* users in order to let the other users browse at a satisfactory performance level. With such a mechanism one will improve the user perceived performance level and be able to postpone web server investments, leading directly to lower net present value of server investments.

The aim of the method proposed here is to maximise the number of users that can be served with satisfactory performance during server overload periods. To that end, the method for handling an access request to a server is improved when, firstly, it is detected whether or not the server is or threatens to be overloaded. When indeed the server is overloaded or threatens to be overloaded, the kind of that server overload is detected, as well as the kind of requested access. Subsequently, the kind of (threatening) server overload and the kind of the requested access are compared. If the kind of requested access is not deemed to contribute to the server overload the requested access is judged to be admissible ("OK") and/or -reversely- if the kind of requested access is deemed to contribute to the server overload the requested access is judged to be not-admissible ("NOK").

So, besides detection of a (threatening) server overload also the *kind* of overload is detected. E.g. the overload situation may be due to a (threatening) overload of the server's control means (e.g. its operating system etc.), the server's interface means like nodes, routers, modems, protocol converters etc. via which clients are connected to the server, or an overload of the (resources for) applications etc. installed at the server, which may be called by clients.

On the other hand, the kind of the requested access is detected. For instance a service may be requested like a database search, an image download, a streaming music or video service, or a banking service.

Both, the kind of (threatening) server overload and the kind of the access request are compared. If the kind of requested access is not deemed to contribute to the server overload, the requested access may be judged to be admissible. Reversely, if the kind of requested access is deemed to contribute to the server overload the requested access may be judged to be not-admissible.

Different clients (users) may have arranged different "service level agreements" (SLAs) with the respective server or service (provider). The SLA may rule rights and obligations of the respective client and server, e.g. with respect to quality of service, priority, maximum amount of data, bit rate, tariffs, etc. Based on the SLA, one or more service level indicators may be assigned to the clients, which service level indicators may be read or detected by the server e.g. at arrival of the client's access request.

If different clients, requesting for access to the server, have different service level indicators, it may preferred that, if the kind of requested access is deemed to contribute to the server overload, the requested access of clients having a relative high service level indicator is given preference or priority over clients having a relative low service level indicator. The requested access may be judged to be admissible for clients having a relative high service level indicator and/or -reversely- be judged not-admissible for clients having a relative low service level indicator.

### FIGURES

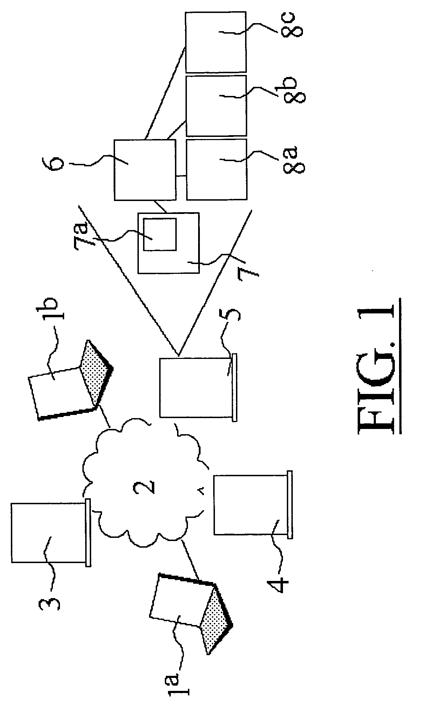

Figure 1 shows an embodiment of a system in which the method presented above may be performed. Figure 1 shows user or client terminals 1a and 1b, the Internet 2 and servers 3, 4 and 5. The terminals 1a and 1b may send, via the Internet 2, an access request to server 5. The server 5 may comprise server control means 6, interface means 7 and application means or modules 8, e.g. comprising of a database application 8a, a streaming audio application 8b and a banking application 8c. The application modules 8 are under general control of the server control means 6 and make use of the interface means 7 for the exchange of data with other servers (e.g. 3 and 4) and the terminals 1a and 1b.

The user of terminal 1a may wish to use the banking application 8c as implemented in server 5. To that end terminal 1a transmits an access request to server 5. A request handler module 7a within the interface means 7 may be fit to detect -either continuously or after reception of the access request- whether or not the server is or threatens to be overloaded, e.g. when the server load is more than 90%. When the server is or threatens to be overloaded indeed, the request handler 7a detects the kind of server overload, e.g. an (threatening) overload in the interface means 7 itself, in the general control means 6 or in one of the applications, the database application 8a, the streaming audio application 8b or in the banking application. Moreover, the request handler 7a detects, guided by e.g. request parameters, addresses etc., the kind of requested access, e.g. a request to access the banking application 8c. Both, the kind of requested access and the kind of server overload are compared to one another. If the client terminal 1a requests for access to the banking application 8c and the streaming audio application 8b is (nearly) overloaded, the handler 7a may consider that, as the kind of requested access (viz. to the banking application 8c) is not deemed to contribute to the server overload, the requested access is admissible. If, however, the handler 7a "knows" or detects that the (requested) banking application 8c is threatened by overload and the requested access is thus deemed to contribute to the server overload, the handler 7a will consider the requested access to be not-admissible and will refuse the requested access.

Different clients (users), e.g. using different terminals 1a and 1b, may have arranged different "service level agreements" (SLA) with the respective server or service, e.g. with respect to quality of service, priority, maximum amount of data, bit rate, tariffs, etc. Based on the SLA, one or more service level indicators may be assigned to the clients, users or terminals 1. The service level indicators may be read or detected by the server 5 when e.g. at arrival of the access request from terminals 1a and 1b respectively.

Suppose that access to the server 5 is requested by a terminal 1a, e.g. used by a user A -for example detected by A's user profile data or other characteristics- having a relative high service level indicator e.g. with respect to the quality of service. If it is detected, by the request handler 7a, that the kind of access requested by user A, e.g. pointing to use application 8a, is deemed to contribute to the overload of the server (caused by the relevant server means or components, e.g. the server's interface or the selected application 8a) the requested access of user A may is given preference or priority over a user B, requesting access to the same server 5 (and e.g. to the same application 8a), having a relative low service level indicator. For this reason, in this case the access requested by user A may be judged to be admissible to the server 5 and server means (like application 8a), based at A's high service level indicator, while a request for access done by user B, having a relative low service level indicator, is judged not-admissible to the requested service application 8a.

It is noted that the request handler 7a may be internal, as shown in figure 1, or be comprised by an external server, e.g. server 3. In the latter case server 5 has to be configured that at reception of a request, the functionality of handler 7a as discussed above, is performed by that external request handler. Further, it is noted that the server 5 may comprise logging means, e.g. a logging database, to which all (threatening) overload occurrences, including e.g. their kind and/or cause, time stamp, may be stored. Also the admitted and/or not-admitted access requests may be stored (logged). When an access request is not admitted, the requesting client 1a or 1b may be notified that his/her request is refused due to an (imminent) overload of the requested resources at the server's side.

## Claims

1. Method for handling an access request to an information processing system (5), the method comprising next steps:
- it is detected whether or not the system (5) is or threatens to be overloaded;
- when the system is or threatens to be overloaded,
o the kind of system overload is detected;
o the kind of requested access is detected;
o the kind of requested access is compared with the kind of system overload;
o if the kind of requested access is not deemed to contribute to the system overload the requested access is judged to be admissible and/or if the kind of requested access is deemed to contribute to the system overload the requested access is judged to be not-admissible.

2. Method according to claim 1, the information processing system (5) comprising system control means (6), interface means (7) and client application means (8a, 8b, 8c), the method comprising next steps when the system (5) is overloaded or threatens to be overloaded:
o it is detected whether the system control means, the interface means or the relevant client application means are or are threatened to be overloaded;
o it is detected whether the requested access will load the system control means, the interface means or the relevant client application means;
o if the requested access is not deemed to contribute to the overload of the relevant system means, the requested access is judged to be admissible and/or if the requested access is deemed to load the relevant system means, the requested access is judged to be not-admissible.

3. Method according to claim 1, several clients requesting for access to the information processing system (5) and service level indicators being assigned to those clients, the method comprising that if the kind of requested access is deemed to contribute to the system overload, the requested access of clients having a relative high service level indicator is given preference or priority over clients having a relative low service level indicator.

4. Method according to claim 3, the requested access, deemed to contribute to the system overload, is judged to be admissible for clients having a relative high service level indicator and/or not-admissible for clients having a relative low service level indicator.

5. Method according to claim 1, comprising that information regarding all access requests and/or access requests which are not judged to be admissible are logged by the information processing system (5).

6. Method according to claim 1, comprising that a client, requesting for access to the information processing system (5), is notified if the access request is not judged to be admissible.
